(19) Europäisches Patentamt
European Patent Office
Office européen des brevets

(11) **EP 4 718 065 A1**

(12) **EUROPEAN PATENT APPLICATION**

(43) Date of publication:
**01.04.2026 Bulletin 2026/14**

(21) Application number: **25204614.9**

(22) Date of filing: **25.09.2025**

(51) International Patent Classification (IPC):
***G01N 23/223*** *(2006.01)*

(52) Cooperative Patent Classification (CPC):
**G01N 23/223**; G01N 2223/305

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **26.09.2024 JP 2024167338**

(71) Applicant: **Hitachi High-Tech Analysis
Corporation
Tokyo 105-6411 (JP)**

(72) Inventors:
• **KANAZAWA, Yuki
Tokyo, 105-6411 (JP)**
• **SHIROKOBROD, Oleg
02631 Espoo (FI)**
• **TATSUMI, Masaki
Tokyo, 105-6411 (JP)**
• **IZUMIYAMA, Masaki
Tokyo, 105-6411 (JP)**

(74) Representative: **Stöckeler, Ferdinand et al
Schoppe, Zimmermann, Stöckeler
Zinkler, Schenk & Partner mbB
Patentanwälte
Radlkoferstrasse 2
81373 München (DE)**

(54) **X-RAY FLUORESCENCE ANALYZER**

(57)    An objective is to perform sample analysis at high speed by incorporating optical geometrical factors of an optical system in fluorescence X-ray analysis/ A fluorescence X-ray analysis apparatus includes an X-ray source that irradiates a sample with primary X-rays, a detector (measurement means) that obtains a measured intensity of secondary X-rays, a controller (theoretical intensity calculation unit) that calculates theoretical intensity of the secondary X-rays based on an assumed composition, and a controller(calculation unit) that calculate a composition by modifying calculation of the assumed composition in successive approximation so that the measured intensity matches theoretical intensity, wherein the controller calculates a theoretical intensity by multiplying by detection efficiency of the fluorescence X-rays, which depends on a sample depth from the surface of the sample irradiated with the primary X-rays to the point inside the sample where the secondary X-rays are generated.

EP 4 718 065 A1

PRELIMINARY PREPARATION

RELATIONSHIP BETWEEN SAMPLE DEPTH (Z) AND DETECTION EFFICIENCY (DΩD(Z)) IS OBTAINED — S1

APPROXIMATION FORMULA IS OBTAINED — S2

QUANTITATIVE CALCULATION OPERATION

MEASURED INTENSITY OF SECONDARY X-RAYS IS OBTAINED — S3

COMPOSITION OF SAMPLE 3 IS ASSUMED — S4

THEORETICAL INTENSITY OF SECONDARY X-RAYS IS CALCULATED ON BASIS OF ASSUMED SAMPLE COMPOSITION — S5

THEORETICAL INTENSITY AND MEASURED INTENSITY ARE COMPARED, AND SAMPLE COMPOSITION IS SEQUENTIALLY CORRECTED UNTIL THEY MATCH — S6

FIG. 2

**Description**

BACKGROUND

Technical Field

The present disclosure relates to an X-ray fluorescence analyzer for analyzing the composition or area density of a sample by the Fundamental Parameter Method (FP method).

Description of the Related Art

In order to determine the elemental composition in a sample, an FP method that converges the assumed composition by comparing the theoretical intensity of secondary X-rays calculated based on assumed elemental composition with a measured intensity is known. The theoretical intensity is obtained by calculation using parameters such as the size of a sample and the intensity and incident angle of primary X-rays emitted onto each position on the sample surface. The theoretical intensity may also be obtained by simulation and calculation of the theoretical intensity of secondary X-rays for each optical path to incorporate geometric factors of an optical system (for example, see Patent Document 1).

(Prior Art Document)

(Patent Document)

(Patent Document 1) Japanese Patent Application Publication No. 2006-292399

SUMMARY

The simulation for obtaining theoretical intensity as described above is performed for each optical path of primary X-rays and is also repeatedly conducted to achieve convergence of an assumed composition. Therefore, in conventional X-ray fluorescence analyzers, the time required for analysis becomes longer.
The present disclosure has been made in view of the above points and an objective of the present disclosure is to enable high-speed sample analysis.
In order to achieve the objectives, the present disclosure provides an X-ray fluorescence analyzer for analyzing a sample that includes: an X-ray source configured to irradiate a sample with primary X-rays; a unit configured to obtain a measured intensity by measuring intensity of secondary X-rays generated from the sample; a theoretical intensity calculation unit configured to calculate theoretical intensity of secondary X-rays generated from each element in the sample based on an assumed composition; and a calculation unit configured to calculate a composition of the sample by modifying calculation of the assumed composition in successive approximation so that the theoretical intensity matches the measured intensity matches the theoretical intensity, wherein the theoretical intensity calculation unit calculates the theoretical intensity by multiplying by detection efficiency of the fluorescence X-rays depending on a sample depth that is a distance from a surface of the sample irradiated with the primary X-rays to a point inside the sample where the secondary X-rays are generated.
Accordingly, it is possible to obtain high-accuracy theoretical intensity at high speed and analyze a sample even without performing Monte Carlo simulation.
In the present disclosure, it is possible to perform sample analysis at high speed.

BRIEF DESCRIPTION OF THE DRAWINGS

FIG. 1 is a schematic diagram showing the configuration of an X-ray fluorescence analyzer;
FIG. 2 is a flowchart showing an example of an analysis operation;
FIG. 3 is a graph showing an example of the relationship between sample depth and detection efficiency; and
FIG. 4 is an explanatory diagram showing an example of preparatory measurement.

DETAILED DESCRIPTION

(Schematic Configuration of X-ray Fluorescence analyzer)

Hereinafter, embodiments of the present disclosure are described with reference to drawings.

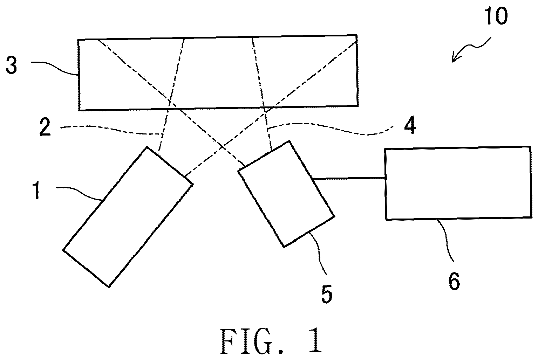

As shown in FIG. 1, an X-ray fluorescence analyzer 10 includes: an X-ray source 1, such as an X-ray tube, that irradiates a sample 3 with primary X-rays 2; a detector 5 (measurement unit) that obtains a measured intensity by measuring the intensity of secondary X-rays 4, such as fluorescence X-rays or scattered rays, generated from the sample 3; and a controller 6 (theoretical intensity calculation unit, calculation unit) that performs processing such as calculating elemental composition in the sample 3. In the X-ray fluorescence analyzer 10, for example, analysis of the sample 3 is performed as follows.

(Analysis Operation: Preparatory Process)

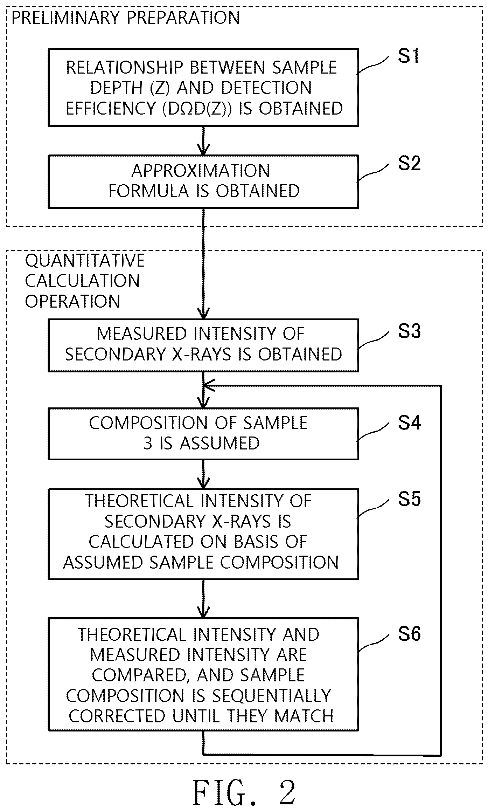

First, as shown in FIG. 2, the following processes are performed as preparatory steps.

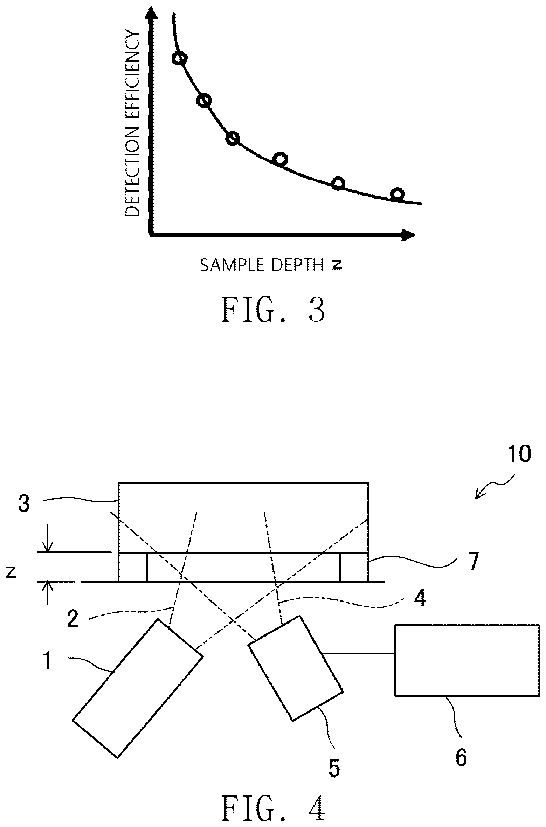

(S1) A relationship between a sample depth (sample height) (z), which is the distance from the surface of the sample 3 irradiated with the primary X-rays 2 to the point inside the sample 3 where the secondary X-rays 4 are generated, and detection efficiency $d\Omega d(z)$ of the fluorescent X-rays, for example, the relationship shown in FIG. 3 is obtained. This relationship is specifically obtained through simulation or actual measurement, which will be described later.

(S2) As an approximation of the above relationship, for example, an exponential function shown in the following Equation (1) or a polynomial shown in Equation 2 is obtained. Here, $\Omega_\infty$, $\Omega_0$, $\alpha_0$, etc. in Equations (1) and (2) are adjustment coefficients.

[Equation 1]

$$d\Omega_d(z) = \Omega_\infty + \Omega_0 exp\left(-\frac{z}{d}\right) \qquad (1)$$

[Equation 2]

$$d\Omega_d(z) = a_0 + a_1 * z + a_2 * z^2 + \cdots \qquad (2)$$

The preparatory process as described above needs only to be performed once, for example, when the X-ray fluorescence analyzer 10 is introduced and used for the first time. That is, the detection efficiency of the fluorescence X-rays may be obtained in advance and stored to be used for a plurality of sample analyses.

(Analysis Operation: Quantitative Calculation Operation)

The flow of the quantitative calculation itself is the same as the typical FP method, but the operations performed at that time are carried out as described below, which enables high-speed analysis.

(S3) First, a measured intensity of the secondary X-rays is measured for the sample 3.

(S4) Further, as in the typical FP method, the composition of the sample 3 is assumed.

(S5) Theoretical intensity of the secondary X-rays is calculated based on the assumed sample composition. Specifically, the following calculations are performed.

Here, generally, that is, the intensity I of the fluorescent X-rays, when the detection efficiency $d\Omega d$ of the fluorescence X-rays according to the sample depth z is not taken into account, can be expressed by the following Equation (3). Further, in Equation (3), E is the energy of incident X-rays, $\rho$ represents the density of the sample to be measured, t is the thickness of the sample to be measured, $\mu(E)$ is a physical parameter of X-rays (mass absorption coefficient with respect to the energy of the incident X-rays), $\mu(E_i)$ is a physical parameter of X-rays (mass absorption coefficient with respect to the energy of the generated fluorescent X-rays), $\varphi1$ and $\varphi2$ are the incident angle and the exit angle of the X-rays with respect to the sample 3, respectively, $Io(E)$ is the intensity of the incident (primary) X-rays, and $Q_i(E)$ is the generation efficiency of the fluorescence X-rays for the quantitative element.

[Equation 3]

$$I_i(E) \propto I_0(E) \times Q_i(E) \times \int_0^t exp(-\rho\chi(E)z)\,dz$$

$$(3)$$

$$\chi = \left(\frac{\mu(E)}{\sin\psi_1} + \frac{\mu(E_i)}{\sin\psi_2}\right)$$

Here, the term in Equation (3) that depends on the sample depth is defined as g(E) as shown in Equation (4).
[Equation 4]

$$g(E) = \int_0^t exp\{-\rho\chi(E)z\}\,dz$$

$$(4)$$

For the term g(E) depending on the sample depth, in the present embodiment, a expression g(E)' is used, which is corrected by being multiplied by the detection efficiency dΩd, as shown in the following Equation (5).
[Equation 5]

$$g(E)' = \int_0^t exp\{-\rho\chi(E)z\}d\Omega_d(z)\,dz$$

$$(5)$$

In Equation (5), a highly accurate theoretical intensity is obtained by calculating over the sample depth z using numerical integration methods such as the trapezoidal rule or Simpson's rule with an appropriate step size.
Further, when dΩd in Equation (5) is expressed as an exponential function of the sample depth z, as in Equation (1), g(E)' can be formulated as shown in the following Equation (6) which is the result of integration.
[Equation 6]

$$g(E)' = \frac{1}{\rho}\left(\frac{\Omega_\infty}{\chi}(1 - e^{-\rho\cdot\chi\cdot d}) + \frac{\Omega_0}{\frac{1}{\rho t} + \chi}\left(1 - e^{-\left(\frac{1}{t}+\rho\cdot\chi\right)\cdot d}\right)\right)$$

$$(6)$$

Further, when dΩd in Equation (5) is expressed as polynomial of the sample depth z, as in Equation (2), g(E)' can be formulated as shown in the following Equation (7) which is the result of integration).
[Equation 7]

$$g(E)' = a_0 * I_0 + a_1 * I_1 + a_2 * I_2$$

$$(7)$$

where $I_0$, $I_1$, and $I_2$ in Equation (7) are the following Equations (8) to (10).
[Equation 8]

$$I_0 = \int_0^d e^{-\rho\cdot\chi\cdot x}\,dx = \frac{1}{\rho * \chi}(1 - e^{-\rho\cdot\chi\cdot t})$$

$$(8)$$

[Equation 9]

$$I_1 = \frac{1}{\rho * \chi}(I_0 - de^{-\rho \cdot \chi \cdot t})$$

$$(9)$$

[Equation 10]

$$I_2 = \frac{1}{\rho * \chi}(2I_1 - d^2 e^{-\rho \cdot \chi \cdot t})$$

$$(10)$$

By obtaining theoretical intensity through such an algebraic expression developed from integration, it is possible to obtain a highly accurate theoretical intensity that considers detection efficiency depending on the sample depth z at high speed compared to cases involving Monte Carlo simulations.

(S6) The theoretical intensity and the measured intensity are compared, and the assumed sample composition is modified to match them in successive approximation, after which the steps following (S3) are repeated.

(Detailed Example 1 of preliminary preparation)

An example of obtaining the relationship between the sample depth z, which is the distance from the surface of sample 3 to the point where the secondary X-rays 4 are generated inside sample 3, and the fluorescence X-ray detection efficiency dΩd(z), as shown in FIG. 3 by Monte Carlo simulation, is explained.

For the irradiation region of the primary X-rays generated from the tube of the X-ray source 1, the detection region observable by the detector 5 (where secondary X-rays can enter the detector 5), or an observable region in which both regions overlap, at each plane of the sample depth z with a predetermined interval (step), the position where the secondary X-rays are generated and their propagation angles are determined using random numbers, and if the secondary X-rays enter the detection window of the detector 5 and can be observed, they are counted. The determination of such positions and counting are repeated a sufficient number of times to calculate the total count. Further, the above process is repeated at step intervals for each sample depth z.

Accordingly, the relationship between the sample depth (sample height) and the detection efficiency (detector solid angle), as shown in FIG. 3, is obtained.

(Detailed Example 2 of preliminary preparation)

The relationship between the sample depth z and the fluorescence X-ray detection efficiency dΩd(z) can also be obtained by actual measurement. For example, as shown in FIG. 4, the intensity of the secondary X-rays incident on the detector 5 is measured at each sample depth z while varying the distance between the fluorescence X-ray analysis apparatus 10 and the surface of the sample 3 with predetermined step intervals, for example, by installing a spacer 7 between the target fluorescence X-ray analysis apparatus 10 and sample 3. Here, the sample 3 may differ from the actual sample to be actually analyzed, but it is preferable to use elements with large X-ray absorption coefficients, such as copper (Cu) or zinc (Zn), because it is easier to measure secondary X-rays mainly from the surface of the sample 3 (short analysis depth). Further, it is necessary to select fluorescence X-rays with energy that allows neglecting absorption by air.

Even by such actual measurement, the relationship between the sample depth (sample height) and the detection efficiency (detector solid angle), as shown in FIG. 3, is obtained.

The simulation as described above only needs to be performed once for the fluorescence X-ray analysis apparatus 10 and does not need to be performed for each actual analysis of the sample 3, so it is possible to facilitate faster analysis.

[Explanation of reference number]

1    X-ray source
2    primary X-rays
3    sample
4    secondary X-rays
5    detector
6    controller

7     spacer
10    X-ray fluorescence analyzer

**Claims**

1.  An X-ray fluorescence analyzer (10) for analyzing a sample (3), comprising:

    an X-ray source (1) configured to irradiate a sample (3) with primary X-rays (2);
    a unit configured to measure intensity of secondary X-rays (4) generated from the sample (3);
    a theoretical intensity calculation unit configured to calculate theoretical intensity of secondary X-rays (4) generated from each element in the sample (3) based on an assumed composition; and
    a calculation unit configured to calculate a composition of the sample (3) by modifying calculation of the assumed composition in successive approximation so that the theoretical intensity matches the intensity of the secondary X-rays (4) that was measured,
    **characterized in that** the theoretical intensity calculation unit calculates the theoretical intensity based on a product of detection efficiency of the fluorescence X-rays depending on a sample depth, intensity of the primary X-rays (2), and X-ray generation efficiency of quantitative elements, the sample depth being a distance from a surface of the sample (3) irradiated with the primary X-rays (2) to a point inside the sample where the secondary X-rays (4) are generated; and
    detection efficiency of the fluorescence X-rays is obtained in advance and stored to be used for a plurality of sample analyses.

2.  The X-ray fluorescence analyzer (10) according to claim 1, wherein the detection efficiency is approximated with an exponential function or a polynomial, and the theoretical intensity is calculated based on an integral of a product of the approximated exponential function or polynomial, intensity of primary X-rays (2), and X-ray generation efficiency of quantitative elements.

3.  The X-ray fluorescence analyzer (10) according to claim 1, wherein the theoretical intensity is obtained by calculating an integral of the product of detection efficiency of fluorescence X-rays, intensity of primary X-rays (2), and X-ray generation efficiency of quantitative elements over the sample depth using a numerical integration method.

4.  The X-ray fluorescence analyzer according to any one of claims 1 to 3, wherein the detection efficiency is obtained based on intensity, obtained through Monte Carlo simulation or actual measurement, of fluorescence X-rays generated from respective points inside the sample (3).

FIG. 1

PRELIMINARY PREPARATION

RELATIONSHIP BETWEEN SAMPLE DEPTH (Z) AND DETECTION EFFICIENCY (DΩD(Z)) IS OBTAINED — S1

APPROXIMATION FORMULA IS OBTAINED — S2

QUANTITATIVE CALCULATION OPERATION

MEASURED INTENSITY OF SECONDARY X-RAYS IS OBTAINED — S3

COMPOSITION OF SAMPLE 3 IS ASSUMED — S4

THEORETICAL INTENSITY OF SECONDARY X-RAYS IS CALCULATED ON BASIS OF ASSUMED SAMPLE COMPOSITION — S5

THEORETICAL INTENSITY AND MEASURED INTENSITY ARE COMPARED, AND SAMPLE COMPOSITION IS SEQUENTIALLY CORRECTED UNTIL THEY MATCH — S6

FIG. 2

FIG. 3

FIG. 4

Europäisches
Patentamt

European
Patent Office

Office européen
des brevets

# EUROPEAN SEARCH REPORT

**Application Number**

EP 25 20 4614

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | AHMED MD FOIEZ ET AL: "Development of an attenuation correction method for direct x-ray fluorescence (XRF) imaging utilizing gold L-shell XRF photons", MEDICAL PHYSICS., vol. 45, no. 12, 8 November 2018 (2018-11-08), pages 5543-5554, XP093359279, US ISSN: 0094-2405, DOI: 10.1002/mp.13234 * abstract * * Section 2B * | 1-4 | INV. G01N23/223 |
| A | EP 3 779 419 A1 (RIKEN [JP]) 17 February 2021 (2021-02-17) * paragraph [0041] - paragraph [0043] * * paragraph [0083] - paragraph [0087] * * paragraph [0126] - paragraph [0128] * * paragraph [0161] - paragraph [0164] * | 1-4 | |
| A | BAUMANN J ET AL: "A compact and efficient angle-resolved X-ray fluorescence spectrometer for elemental depth profiling", SPECTROCHIMICA ACTA. PART B: ATOMIC SPECTROSCOPY, NEW YORK, NY, US, US, vol. 181, 14 May 2021 (2021-05-14), XP086680903, ISSN: 0584-8547, DOI: 10.1016/J.SAB.2021.106216 [retrieved on 2021-05-14] * abstract * | 1-4 | **TECHNICAL FIELDS SEARCHED (IPC)** <br><br> G01N |

The present search report has been drawn up for all claims

| Place of search | Date of completion of the search | Examiner |
|---|---|---|
| The Hague | 28 January 2026 | Steinmetz, Johannes |

EPO FORM 1503 03.82 (P04C01)

## ANNEX TO THE EUROPEAN SEARCH REPORT
## ON EUROPEAN PATENT APPLICATION NO.

EP 25 20 4614

This annex lists the patent family members relating to the patent documents cited in the above-mentioned European search report.
The members are as contained in the European Patent Office EDP file on
The European Patent Office is in no way liable for these particulars which are merely given for the purpose of information.

28-01-2026

| Patent document cited in search report | | Publication date | Patent family member(s) | | Publication date |
|---|---|---|---|---|---|
| EP 3779419 | A1 | 17-02-2021 | EP | 3779419 A1 | 17-02-2021 |
| | | | HU | E072582 T2 | 28-11-2025 |
| | | | JP | 7311161 B2 | 19-07-2023 |
| | | | JP | 7492713 B2 | 30-05-2024 |
| | | | JP | 7735001 B2 | 08-09-2025 |
| | | | JP | 2023083597 A | 15-06-2023 |
| | | | JP | 2024083401 A | 21-06-2024 |
| | | | JP | WO2019198260 A1 | 15-04-2021 |
| | | | US | 2021033542 A1 | 04-02-2021 |
| | | | WO | 2019198260 A1 | 17-10-2019 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006292399 A